(19) Europäisches Patentamt
European Patent Office
Office européen des brevets

(11) **EP 2 276 658 B1**

(12) **EUROPÄISCHE PATENTSCHRIFT**

(45) Veröffentlichungstag und Bekanntmachung des Hinweises auf die Patenterteilung:
**04.09.2013 Patentblatt 2013/36**

(21) Anmeldenummer: **09726830.4**

(22) Anmeldetag: **31.03.2009**

(51) Int Cl.:
*B61F 15/12* (2006.01)  *F16C 19/52* (2006.01)
*G01L 5/00* (2006.01)

(86) Internationale Anmeldenummer:
**PCT/EP2009/053810**

(87) Internationale Veröffentlichungsnummer:
**WO 2009/121879 (08.10.2009 Gazette 2009/41)**

(54) **MESSLAGER, INSBESONDERE FÜR EINEN RADSATZ EINES SCHIENENFAHRZEUGES**

MEASUREMENT BEARING, IN PARTICULAR FOR A WHEEL SET OF A RAIL VEHICLE

PALIER DE MESURE, NOTAMMENT POUR UNE PAIRE DE ROUES D'UN VÉHICULE FERROVIAIRE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **31.03.2008 DE 102008016592**

(43) Veröffentlichungstag der Anmeldung:
**26.01.2011 Patentblatt 2011/04**

(73) Patentinhaber: **Bombardier Transportation GmbH 10785 Berlin (DE)**

(72) Erfinder:
• **SCHNEIDER, Richard**
**8224 Löhningen (CH)**
• **LUZI, Armin**
**8542 Wiesendangen (CH)**
• **DÖRNER, Heinz-Dieter**
**57647 Nistertal (Erbach) (DE)**
• **LEUSCH, Jochen**
**9548 Matzingen (CH)**

(74) Vertreter: **Karlhuber, Mathias**
**COHAUSZ & FLORACK**
**Patent- und Rechtsanwälte**
**Partnerschaftsgesellschaft**
**Bleichstrasse 14**
**40211 Düsseldorf (DE)**

(56) Entgegenhaltungen:
WO-A-01/23862    DE-A1-102004 054 201
GB-A- 1 378 685    US-A- 4 341 122

**Beschreibung**

Die vorliegende Erfindung betrifft ein Messlager, insbesondere für einen Radsatz eines Schienenfahrzeugs, mit einer Drehachse und wenigstens einem ersten Lagerring, wie es im Oberbegriff des Anspruchs 1 definiert ist. Der erste Lagerring definiert eine Hauptstützrichtung und eine quer zur Hauptstützrichtung verlaufende Umfangsrichtung. Weiterhin ist der erste Lagerring dazu ausgebildet, Tragkräfte aufzunehmen, die zumindest eine Kraftkomponente in der Hauptstützrichtung aufweisen und im Betrieb über eine Mehrzahl von Wälzkörpern in den ersten Lagerring eingeleitet werden. Die vorliegende Erfindung betrifft weiterhin ein Fahrwerk für ein Schienenfahrzeug mit einem solchen Messlager. Schließlich betrifft die Erfindung ein Verfahren zur Ermittlung der mechanischen Belastungen eines Messlagers.

Wälzlager werden in einer Vielzahl unterschiedlicher Gestaltungen eingesetzt, um radiale und/oder axiale Lasten zwischen relativ zueinander drehbaren Bauteilen zu übertragen. Hierbei können die Komponenten des Wälzlagers je nach dem Anwendungsfall unterschiedlichsten Lastfällen (z. B. statische und/oder dynamische Last, umlaufende und/oder stationäre Last etc.) unterliegen, für welche das Lager entsprechend ausgelegt sein muss. Zwar ist es möglich, das Lager und die zu erwartenden Lastfälle weit gehend zu modellieren und anhand von Simulationsrechnungen die Auslegung eines solchen Lagers vorzunehmen. Problematisch ist jedoch nach wie vor, dass für die zu erwartenden Lastfälle zwangsläufig eine gewisse Vereinfachung vorgenommen werden muss. Zudem bereitet es Schwierigkeiten, Fertigungstoleranzen und Einbautoleranzen in derartigen Modellrechnungen zu berücksichtigen.

Weiterhin ist es bekannt, die tatsächlich im Betrieb eines Lagers auftretenden Lastfalle durch Analyse des Tragbilds bzw. des Schädigungsbildes eines genutzten Lagers abzuschätzen. Jedoch ist es auch hier schwierig, Rückschlüsse auf die tatsächliche Lastsituation im Betrieb zu ziehen.

Die oben genannten Modelle des Wälzlagers finden unter anderem auch in Verfahren Anwendung, die zur Identifikation des (Schädigungs-)Zustands eines Wälzlagers dieses Typs dienen. Ein solches Verfahren ist beispielsweise aus der EP 1 197 415 B1 bekannt. Hierbei wird aus dynamischen Messungen (über Beschleunigungssensoren) im Bereich eines Lagers anhand eines Modells des Lagers auf dessen Schädigungsgrad geschlossen. Zwar kann über eine spätere Analyse des vermessenen Lagers wiederum eine Verfeinerung des Modells erfolgen. Nach wie vor bleibt aber das Problem, dass lediglich sekundäre Informationen über die tatsächliche Belastung des Lagers gewonnen werden können.

Radsatzlager von Schienenfahrzeugen unterliegen in der Regel zum einen vergleichsweise hohen Belastungen, während zum anderen für solche Radsatzlager eine hohe Haltbarkeit gefordert wird. Dies gilt insbesondere für die Radsatzlager von Hochgeschwindigkeitsfahrzeugen. Trotz vergleichsweise hohem Aufwand bei der Auslegung der Radsatzlager und einer qualitativ hochwertigen Fertigung werden gelegentlich Schaden beobachtet, deren Ursache unklar ist.

Aus der DE 10 2004 054 201 A1 ist ein Messlager bekannt, bei welchem an den axialen Flanken eines Lagerrings Lastsensoren vorgesehen sind, während aus der US 4,341, 122 und der GB 1 378 685 jeweils Messlager bekannt sind, bei welchen im Tragbereich eines Lagerrings in entsprechenden Ausnehmungen in Umfangsrichtung oder quer zur Umfangsrichtung versetzte Lastsensoren vorgesehen sind. Gleiches gilt für ein gattungsgemäßes Messlager, wie es aus der WO 01123862 A1 bekannt ist. Problematisch bei diesen bekannten Messlagern ist, dass die Ausnehmungen für die Sensorik entweder zu weit vom Tragbereich entfernt sind oder eine zu große Schwächung des Tragbereichs darstellen, dass die Lastmessungen nur bedingt den tatsächlichen Lastverhältnisse in einem entsprechenden Normallager (ohne Messeinrichtungen) entsprechen.

Der vorliegenden Erfindung liegt daher die Aufgabe zu Grunde, ein Messlager bzw. ein Verfahren der eingangs genannten Art zur Verfügung zu stellen, weiches die oben genannten Nachteile überwindet und insbesondere bei einfachem Aufbau eine zuverlässige Messung der tatsächlichen Belastungen des Lagers ermöglicht.

Die vorliegende Erfindung löst diese Aufgabe ausgehend von einem Messlager gemäß dem Oberbegriff des Anspruchs 1 durch die im kennzeichnenden Teil des Anspruchs 1 angegebenen Merkmale. Sie löst diese Aufgabe weiterhin ausgehend von einem Verfahren gemäß dem Oberbegriff des Anspruchs 11 durch die im kennzeichnenden Teil des Anspruchs 11 angegebenen Merkmale

Der vorliegenden Erfindung liegt die technische Lehre zu Grunde, dass man bei einfachem Aufbau eine zuverlässige Messung der tatsächlichen Belastungen des Lagers ermöglicht, wenn in einen Lagerring des Lagers eine Ausnehmung eingebracht wird, in der eine entsprechende Sensoreinrichtung (mit einem oder mehreren Sensoren oder dergleichen) angeordnet wird, um im Betrieb des Lagers, möglichst in Echtzeit, eine oder mehrere Erfassungsgrößen aufzunehmen, welche für die auf das Lager in diesem Bereich wirkenden Lasten repräsentativ ist bzw. sind.

Es hat sich gezeigt, dass eine solche Anordnung, insbesondere eine solche Ausnehmung, in einer Weise erzeugt werden kann, dass hierdurch keine nennenswerte Schwächung des Lagers, insbesondere keine nennenswerte Verringerung der Steifigkeit des Lagers, resultiert. Das Messlager kann mithin also so gestaltet werden, dass seine mechanischen Eigenschaften denjenigen eines Standardlagers (wie es für die betreffende Anwendung vorgesehen ist) zumindest weit gehend entsprechen. Demgemäß kann aus den Messungen am Messlager mit hoher Genauigkeit auf die tatsächliche Lastsituation im Betrieb des Standardlagers geschlossen werden. Die Messungen am Messlager können somit in vorteilhafter Weise für die Auslegung eines solchen Standardlagers verwendet werden, sodass dessen Gestaltung optimiert werden kann.

Gemäß einem Aspekt der Erfindung ist hierzu ein Messlager, insbesondere für einen Radsatz eines Schienenfahrzeugs, mit einer Drehachse und wenigstens einem ersten Lagerring vorgesehen. Der erste Lagerring definiert eine Hauptstützrichtung und eine quer zur Hauptstützrichtung verlaufende Umfangsrichtung. Weiterhin ist der erste Lagerring dazu ausgebildet, Tragkräfte aufzunehmen, die zumindest eine Kraftkomponente in der Hauptstützrichtung aufweisen und im Betrieb über eine Mehrzahl von Wälzkörpern in den ersten Lagerring eingeleitet werden. Der erste Lagerring weist wenigstens eine erste Ausnehmung auf, in der eine Sensoreinrichtung angeordnet ist, wobei die Sensoreinrichtung zum Erfassen einer für die in den Lagerring eingeleiteten Tragkräfte repräsentativen Erfassungsgröße ausgebildet ist.

Die Hauptstützrichtung des Lagers bezeichnet dabei diejenige Richtung, in der das Lager nach seinem Einsatzzweck hauptsächlich Lasten aufnehmen soll. Bei einem reinen Radiallager handelt es sich bei der Hauptstützrichtung um die Radialrichtung des Lagers, während bei einem reinen Axiallager die Axialrichtung des Lagers die Hauptstützrichtung darstellt. Bei Mischformen (beispielsweise Kegelrollenlagern, Tonnenrollenlagern etc.) kann die Hauptstützrichtung gegebenenfalls eine entsprechende Neigung zu der Radialrichtung bzw. Axialrichtung aufweisen. Bei Wälzkörpern mit Mantelflächen, die in einem (die Wälzkörperachse enthaltenden) Schnitt geradlinig verlaufen, ist die Hauptstützrichtung in der Regel durch eine Flächennormale auf der (dem betreffenden Lagerring zugeordneten) Lauffläche der Wälzkörper definiert.

Die erste Ausnehmung ist im Tragbereich des ersten Lagerrings angeordnet, also dem Bereich des ersten Lagerrings, der hauptsächlich die Lasten im Betrieb des Lagers aufnimmt. Dieser Tragbereich liegt in der Projektion der Wälzkörper entlang der Hauptstützrichtung. Daher ist die erste Ausnehmung im Bereich einer Projektion eines Bewegungsraums der Wälzkörper entlang der Hauptstützrichtung angeordnet, wobei der Bewegungsraum der Wälzkörper dem Toroid entspricht, das durch die im Betrieb um die Drehachse umlaufenden Wälzkörper definiert ist.

Um eine einfache Zugänglichkeit der ersten Ausnehmung zu gewährleisten, insbesondere eine einfache Montage der Sensoreinrichtung zu ermöglichen, ist die Ausnehmung vorzugsweise zu einer Seite des Lagerrings hin offen. Vorzugsweise handelt es sich hierbei um eine nicht zur Lauffläche der Wälzkörper weisende Seite des ersten Lagerrings. Bevorzugt ist die erste Ausnehmung zu der den Wälzkörpern abgewandten Seite des ersten Lagerrings offen, da hierdurch in besonders einfacher Weise eine Positionierung der Sensoreinrichtung an einer beliebigen Stelle im Lagerring möglich ist, ohne eine große Ausnehmung im ersten Lagerring und damit eine entsprechende Schwächung des ersten Lagerrings vorsehen zu müssen.

Weiterhin ist wenigstens eine zweite Sensoreinrichtung in dem ersten Lagerring angeordnet, um eine höhere räumliche Auflösung bei der Betrachtung der tatsächlichen Lasten im Lager zu erzielen. Daher weist der erste Lagerring wenigstens eine zweite Ausnehmung auf, in der eine weitere Sensoreinrichtung angeordnet ist, wobei die weitere Sensoreinrichtung zum Erfassen einer für die in den Lagerring eingeleiteten Tragkräfte repräsentativen Erfassungsgröße ausgebildet ist.

Es versteht sich hierbei, dass über die beiden Sensoreinrichtungen hinaus noch weitere Sensoreinrichtungen vorgesehen sein können, um die räumliche Auflösung der Messung zu erhöhen. Hierbei ist jedoch darauf zu achten, dass die durch die zusätzlichen Ausnehmungen entstehende mechanische Schwächung des Lagers, insbesondere die damit einhergehende Verringerung der Steifigkeit, noch in einem tolerablen Bereich bleibt, um zuverlässige Aussagen über die tatsächlichen Lastverhältnisse im Betrieb eines Standardlagers treffen zu können.

Um die lokale Schwächung des ersten Lagerrings im Bereich der jeweiligen Ausnehmung möglichst gering zu halten, weisen die erste Ausnehmung und die zweite Ausnehmung einen entsprechenden Abstand auf. Erfindungsgemäß sind die erste Ausnehmung und die zweite Ausnehmung zueinander in der Umfangsrichtung und quer zu der Umfangsrichtung beabstandet angeordnet sind.

Vorzugsweise sind die erste Ausnehmung und die zweite Ausnehmung zueinander in der Umfangsrichtung um einen ersten Umfangswinkel $\alpha_1$ beabstandet angeordnet, wobei die Wälzkörper im Betrieb eine Teilung definieren, die einem zweiten Umfangswinkel $\alpha_2$ entspricht, und der erste Umfangswinkel $\alpha_1$ größer ist als der zweite Umfangswinkel $\alpha_2$. Der zweite Umfangswinkel $\alpha_2$ berechnet sich dabei mit der Anzahl N der Wälzkörper zu:

$$\alpha_2 = \frac{360°}{N}. \qquad\qquad (1)$$

Bevorzugt beträgt der erste Umfangswinkel $\alpha_1$ wenigstens 110% des zweiten Umfangswinkels $\alpha_2$, vorzugsweise wenigstens 130% des zweiten Umfangswinkels, weiter vorzugsweise wenigstens 150% des zweiten Umfangswinkels, da hiermit eine besonders günstige Anordnung der Sensoreinrichtungen bei gleichzeitiger geringer Schwächung des ersten Lagerrings möglich ist. In diesem Zusammenhang ist anzumerken, dass ein geringer Abstand der beiden Ausnehmungen im Hinblick auf eine auf kurzem Wege erfolgende Ableitung der Sensorsignale (beispielsweise über entsprechende Signalleitungen) aus dem Lagerring heraus von Vorteil ist.

Bei weiteren bevorzugten Varianten des erfindungsgemäßen Messlagers sind die erste Ausnehmung und die zweite Ausnehmung im Bereich einer Projektion eines Bewegungsraums der Wälzkörper entlang der Hauptstützrichtung angeordnet, wobei die erste Ausnehmung und die zweite Ausnehmung zueinander in einer quer zu der Umfangsrichtung verlaufenden Abstandsrichtung um einen Querabstand a beabstandet angeordnet sind. Der Bewegungsraum der Wälzkörper entspricht wiederum dem Toroid, das durch die im Betrieb um die Drehachse umlaufenden Wälzkörper definiert ist. Dieser Bewegungsraum weist in der Abstandsrichtung eine Querabmessung b auf. Der Querabstand a beträgt 30% bis 70% der Querabmessung b, vorzugsweise 40% bis 60% der Querabmessung b, weiter vorzugsweise 45% bis 55% der Querabmessung b.

In diesem Zusammenhang ist anzumerken, dass ein geringer Abstand der beiden Ausnehmungen (in Querrichtung und in Umfangsrichtung) im Hinblick auf eine auf kurzem Wege erfolgende Ableitung der Sensorsignale (beispielsweise über entsprechende Signalleitungen) aus dem Lagerring heraus von Vorteil ist.

Um eine möglichst geringe mechanische Schwächung des Messlagers gegenüber einem entsprechenden Standardlager zu erzielen ist weiterhin die Tiefe der jeweiligen Ausnehmung vorzugsweise entsprechend begrenzt. Bevorzugt ist vorgesehen, dass die erste Ausnehmung in der Hauptstützrichtung eine Tiefenabmessung t aufweist und der erste Lagerring in der Hauptstützrichtung eine Dickenabmessung d aufweist, wobei die Tiefenabmessung t 30% bis 70% der Dickenabmessung d beträgt, vorzugsweise 40% bis 60% der Dickenabmessung d, weiter vorzugsweise 45% bis 55% der Dickenabmessung d.

Die Ableitung bzw. Übertragung der Messsignale der Sensoreinrichtung aus dem Lagerring heraus zu einer entsprechenden Verarbeitungseinheit kann grundsätzlich in beliebiger geeigneter Weise erfolgen. Insbesondere kann die Übertragung der Messsignale ganz oder teilweise drahtlos erfolgen. Bei bevorzugten, weil besonders einfach aufgebauten Varianten ist wenigstens ein in die erste Ausnehmung mündender Leitungskanal vorgesehen, der zum Herausführen einer mit der ersten Sensoreinrichtung verbundenen Signalleitung aus den ersten Lagerring ausgebildet ist.

Der Leitungskanal kann auf beliebige geeignete Weise hergestellt sein. Insbesondere kann in dem ersten Lagerring eine entsprechende Bohrung vorgesehen sein, welche in die erste Ausnehmung mündet. Eine besonders einfach herzustellende Variante des erfindungsgemäßen Messlagers zeichnet sich dadurch aus, dass in dem ersten Lagerring wenigstens eine in der Umfangsrichtung umlaufende und in die erste Ausnehmung mündende erste Nut vorgesehen ist. Vorzugsweise ist dann weiterhin wenigstens eine quer zu der Umfangsrichtung verlaufende zweite Nut vorgesehen ist, die in die erste Nut mündet, um hierüber beispielsweise mit der Sensoreinrichtung verbundene Signalleitungen aus dem ersten Lagerring herauszuführen.

Um auch hier wieder eine möglichst geringe lokale Schwächung des ersten Lagerrings zu erzielen, ist bevorzugt vorgesehen, dass die erste Ausnehmung und die zweite Nut zueinander in der Umfangsrichtung um einen dritten Umfangswinkel $\alpha_3$ beabstandet angeordnet sind, die Wälzkörper (in der oben bereits beschriebenen Weise) im Betrieb eine Teilung definieren, die einem zweiten Umfangswinkel $\alpha_2$ entspricht, und der dritte Umfangswinkel $\alpha_3$ größer ist als der zweite Umfangswinkel $\alpha_2$. Bevorzugt ist auch hier wieder vorgesehen, dass der dritte Umfangswinkel $\alpha_3$ wenigstens 110% des zweiten Umfangswinkels $\alpha_2$ beträgt, vorzugsweise wenigstens 130% des zweiten Umfangswinkels $\alpha_2$, weiter vorzugsweise wenigstens 150% des zweiten Umfangswinkels $\alpha_2$.

In diesem Zusammenhang ist wiederum anzumerken, dass ein geringer Abstand der zweiten Nut von den beiden Ausnehmungen (in Umfangsrichtung) im Hinblick auf eine auf kurzem Wege erfolgende Ableitung der Sensorsignale (beispielsweise über entsprechende Signalleitungen) aus dem Lagerring heraus von Vorteil ist.

Die Erfindung kann wie erwähnt für beliebige Arten von Lagern eingesetzt werden. Besonders einfach und vorteilhaft lässt sie sich im Zusammenhang mit Radiallagern einsetzen. Vorzugsweise definiert der erste Lagerring daher eine Radialrichtung und die Hauptstützrichtung entspricht dieser Radialrichtung. Besonders vorteilhaft lässt sich die Erfindung dabei bei Konfigurationen mit mehreren nebeneinander angeordneten Lagerringen einsetzen. Vorzugsweise definiert der erste Lagerring eine Axialrichtung und es ist in der Axialrichtung benachbart ein zweiter Lagerring vorgesehen. Dabei müssen die beiden Lagerringe nicht unmittelbar aneinander anschließen. Vielmehr kann vorgesehen sein, dass zwischen den ersten Lagerring und dem zweiten Lagerring ein Zwischenring angeordnet ist.

Eine besonders günstige Konfiguration im Hinblick auf die durchzuführenden Messungen ergibt sich, wenn der zweite Lagerring bezüglich einer senkrecht zu der Axialrichtung verlaufenden Symmetrieebene symmetrisch zu dem ersten Lagerring ausgebildet ist.

Die vorliegende Erfindung lässt sich für beliebige Typen von Wälzlagern einsetzen, beispielsweise für Kugellager, Tonnenrollenlager oder Nadelrollenlager. Besonders einfach zu realisieren ist der Einsatz bei Zylinderrollenlagern oder Kegelrollenlagern. Weiterhin kann die Messung an beliebiger Stelle im Lager vorgenommen werden. Der Ort der Messung richtet sich dabei typischerweise nach der Art der Belastung des Lagers (stationäre Last oder umlaufende Last). Dabei ist es von besonderem Interesse die Messungen an dem Lagerring vorzunehmen, der eine umlaufende Last erfährt. Hierbei kann es sich bei einem Radiallager sowohl um einen Außenring als auch um einen Innenring des Radiallagers handeln. Im Fall einen Radsatzlagers bildet der erste Lagerring daher typischerweise einen Innenring des Messlagers. Weiterhin bildet der erste Lagerring in diesem Fall vorzugsweise einen im Betrieb umlaufenden Lagerring des Messlagers.

Die Sensoreinrichtung kann grundsätzlich in beliebiger geeigneter Weise gestaltet sein, um eine für die Belastung des Lagerrings repräsentative Erfassungsgröße zu erfassen. Wegen ihres besonders einfachen Aufbaus und ihrer einfachen Handhabung ist vorzugsweise vorgesehen, dass die erste Sensoreinrichtung wenigstens einen mit dem ersten Lagerring verbundenen Dehnungsmessstreifen umfasst. Vorzugsweise sind wenigstens zwei Dehnungsmessstreifen vorgesehen, die bevorzugt in der ersten Ausnehmung diametral gegenüberliegend angeordnet sind, sodass in einfacher Weise mit einer einzigen Ausnehmung zwei Messebenen realisiert werden können.

Hierbei ist grundsätzlich eine beliebige Ausrichtung der Dehnungsmessstreifen möglich. Wegen der umlaufenden Bewegung ist jedoch vorzugsweise vorgesehen, dass wenigstens ein Dehnungsmessstreifen im Wesentlichen in der Umfangsrichtung ausgerichtet ist.

Die Übermittlung der Messsignale der Sensoreinrichtung an eine Verarbeitungseinheit zu deren weiterer Verarbeitung kann grundsätzlich auf beliebige geeignete Weise erfolgen. Vorzugsweise ist zumindest abschnittsweise eine drahtlose Übertragung vorgesehen. Bevorzugt ist daher vorgesehen, dass die erste Sensoreinrichtung mit einem Sender einer Telemetrieeinrichtung verbunden ist.

Die vorliegende Erfindung betrifft weiterhin ein Schienenfahrzeug mit einem Messlager nach einem der vorhergehenden Ansprüche. Hiermit lassen sich die vorstehend beschriebenen Varianten und Vorteile in demselben Maße realisieren, sodass diesbezüglich auf die obigen Ausführungen verwiesen wird.

Die vorliegenden Erfindung betrifft weiterhin ein Verfahren zur Ermittlung der mechanischen Belastungen eines Messlagers, insbesondere für einen Radsatz eines Schienenfahrzeugs, wie es in Anspruch 11 definiert ist und bei dem ein Messlager verwendet wird, das eine Drehachse und wenigstens einen ersten Lagerring aufweist. Der erste Lagerring definiert eine Hauptstützrichtung und eine quer zur Hauptstützrichtung verlaufende Umfangsrichtung. Der erste Lagerring ist weiterhin dazu ausgebildet, Tragkräfte aufzunehmen, die zumindest eine Kraftkomponente in der Hauptstützrichtung aufweisen und im Betrieb über eine Mehrzahl von Wätzkörpern in den ersten Lagerring eingeleitet werden. Durch eine erste Sensoreinrichtung wird im Betrieb eine für die in den Lagerring eingeleiteten Tragkräfte repräsentative Erfassungsgröße erfasst und in Form von ersten Messsignalen ausgegeben, wobei die erste Sensoreinrichtung in einer ersten Ausnehmung des ersten Lagerrings angeordnet ist. Die ersten Messsignale der ersten Sensoreinrichtung werden dann zur Ermittlung der mechanischen Belastungen verwendet. Hiermit lassen sich die vorstehend beschriebenen Varianten und Vorteile ebenfalls in demselben Maße realisieren, sodass diesbezüglich auf die obigen Ausführungen verwiesen wird.

Weitere bevorzugte Ausgestaltungen der Erfindung ergeben sich aus den Unteransprüchen bzw. der nachstehenden Beschreibung bevorzugter Ausführungsbeispiele, welche auf die beigefügten Zeichnungen Bezug nimmt. Es zeigen:

Figur 1    eine schematische Schnittansicht eines Teils einer bevorzugten Ausführungsform des erfindungsgemäßen Messlagers (entlang Linie I-I aus Figur 2);

Figur 2    eine Draufsicht auf eine Abwicklung des Messlagers aus Figur 1;

Figur 3    eine schematische Seitenansicht eines Teils des erfindungsgemäßen Schienenfahrzeugs mit dem Messlager aus Figur 1 und 2;

Figur 4    eine schematische Schnittansicht eines Teils einer weiteren bevorzugten Ausführungsform des erfindungsgemäßen Messlagers.

Erstes Ausführungsbeispiel

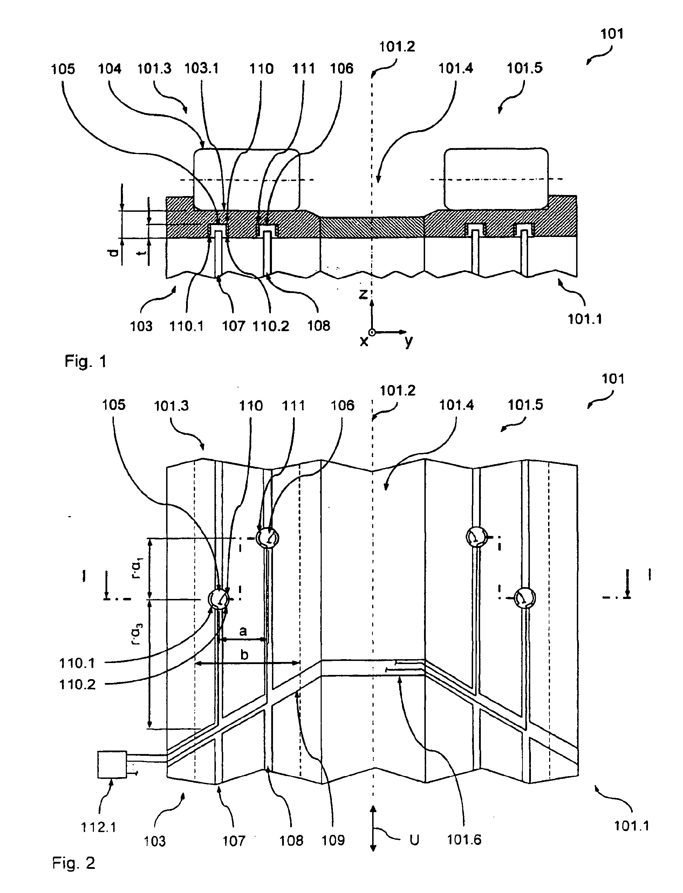

Im Folgenden wird unter Bezugnahme auf die Figuren 1 bis 3 zunächst eine erste bevorzugte Ausführungsform des erfindungsgemäßen Messlagers 101 beschrieben, das in einer bevorzugten Ausführungsform des erfindungsgemäßen Schienenfahrzeugs 102 eingesetzt ist.

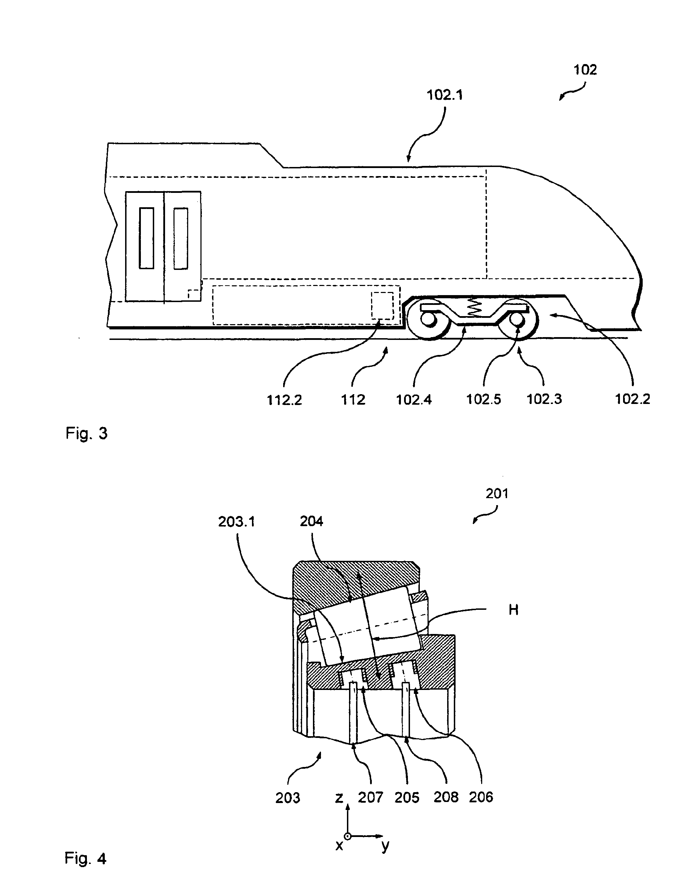

Wie Figur 3 zu entnehmen ist, weist das Schienenfahrzeug 102 einen Wagenkasten 102.1 auf, der auf einem Drehgestell 102.2 abgestützt ist. Das Drehgestell 102.2 umfasst zwei Radsätze 102.3, auf denen der Drehgestellrahmen 102.4 über Radsatzlagereinrichtungen 102.5 abgestützt ist. Die jeweilige Radsatzlagereinrichtung 102.5 umfasst ein Messlager 101 mit einem Innenteil 101.1, der auf der Radsatzwelle (nicht dargestellt) des Radsatzes 102.3 sitzt, während sein Außenteil (nicht dargestellt) in dem Radsatzlagergehäuse (nicht dargestellt) der Radsatzlagereinrichtung 102.5 sitzt.

Das Messlager 101 ist als Zylinderrollenlager ausgebildet und dreiteilig ausgeführt, wobei es spiegelsymmetrisch zu einer Symmetrieebene 101.2 ausgebildet ist. Hierbei umfasst das Messlager einen ersten Teil 101.3, einen zweiten Teil 101.4 und einen dritten Teil 101.5.

Der erste Teil 101.3 des Messlagers 101 umfasst einen ersten Lagerring in Form eines Innenrings 103. Der erste Teil 101.3 des Messlagers 101 umfasst weiterhin eine Mehrzahl von N Wälzkörpern in Form von Zylinderrollen 104, die auf einer Lauffläche 103.1 des Innenrings 103 laufen. Über die Zylinderrollen 104 wird unter anderem der entsprechende Anteil der Gewichtskraft des Wagenkastens 102.1 in einer Hauptstützrichtung, hier der Radialrichtung R des Messlagers 101 (z-Richtung in Figur 1) abgestützt.

Der Innenring 103 weist auf der der Radsatzwelle zugewandten Innenseite eine in die Radialrichtung weisende erste Ausnehmung in Form eines ersten Sacklochs 105 sowie eine in der Radialrichtung weisende zweite Ausnehmung in Form eines zweiten Sacklochs 106 auf.

Weiterhin weist der Innenring 103 auf seiner Innenseite eine in seiner Umfangsrichtung umlaufende erste Nut 107 auf, welche in die erste Ausnehmung 105 mündet. Ebenso weist er eine in seiner Umfangsrichtung U umlaufende zweite Nut 108 auf, welche in die zweite Ausnehmung 106 mündet. Die beiden Nuten 107 und 108 sind über eine schräg zur Umfangsrichtung U verlaufende dritte Nut 109 miteinander verbunden. Die dritte Nut 109 erstreckt sich dabei in Axialrichtung (y-Richtung in Figur 1) des Messlagers 101 vollständig durch den Innenring 103 hindurch.

In der ersten Ausnehmung 105 ist eine erste Sensoreinrichtung 110 angeordnet während in der zweiten Ausnehmung 106 eine zweite Sensoreinrichtung 111 angeordnet ist. Die erste Sensoreinrichtung 110 und die zweite Sensoreinrichtung 111 umfassen jeweils zwei Dehnungsmessstreifen, die einander diametral gegenüberliegend angeordnet sind, sodass sie jeweils im Wesentlichen in Umfangsrichtung U des Innenrings 103 ausgerichtet sind.

Die Dehnungsmessstreifen 110.1, 110.2 der ersten Sensoreinrichtung 110 sind über erste Signalleitungen (beispielsweise Kupferlackdrähte) mit einem Sender 112.1 einer Telemetrieeinrichtung 112 verbunden, der auf der (nicht dargestellten) Radsatzwelle sitzt. Die ersten Signalleitungen sind dabei in der ersten Nut 107 bis zur dritten Nut 109 geführt und dann über die dritte Nut 109 aus den Innenring 103 heraus zu dem Sender 112.1 geführt (wie dies in Figur 2 aus Gründen der Übersichtlichkeit beispielhaft nur für den Dehnungsmessstreifen 110.1 vollständig dargestellt ist).

Die Dehnungsmessstreifen der zweiten Sensoreinrichtung 111 sind über zweite Signalleitungen (beispielsweise Kupferlackdrähte) mit dem Sender 112.1 verbunden. Die zweiten Signalleitungen sind dabei in der zweiten Nut 108 bis zur dritten Nut 109 geführt und dann über die dritte Nut 109 ebenfalls aus den Innenring 103 heraus zu dem Sender 112.1 geführt (wie dies in Figur 2 aus Gründen der Übersichtlichkeit beispielhaft nur für einen der beiden Dehnungsmessstreifen dargestellt ist).

Die Sensoreinrichtungen 110 und 111 liefern in hinlänglich bekannter Weise über die aus den (als Erfassungsgröße dienenden) Verformungen der Dehnungsmessstreifen resultierenden Spannungsänderungen Signale, welche repräsentativ für die am jeweiligen Messort vorliegenden Belastungen des Innenrings 103 sind. Dabei liefern die Sensoreinrichtungen 110 und 111 je nach der verfügbaren Abtastrate in Echtzeit Daten über die aktuelle Belastung des Messlagers. Im vorliegenden Beispiel werden sehr hohe zeitliche Auflösungen erreicht, sodass bezogen auf den Drehwinkel des Messlagers 101 eine Winkelauflösung bis zu 1° erzielt werden kann.

Der Sender 112.1 sendet die Messsignale der Sensoreinrichtungen 110 und 111 an eine Verarbeitungseinheit 112.2 der Telemetrieeinrichtung 112, welche die Signale der Sensoreinrichtungen 110 und 111 entsprechend weiterverarbeitet und hieraus die tatsächlichen Belastungen des Messlagers 101 liefert.

Der dritte Lagerteil 101.5 ist wie erwähnt symmetrisch zum ersten Lagerteil 101.3 ausgeführt und weist dieselbe Anzahl an Sensoreinrichtungen bzw. Dehnungsmessstreifen auf, die über eine in Axialrichtung (y-Richtung in Figur 1) verlaufende (die beiden dritten Nuten 109 des ersten Lagerteils 101.3 und des dritten Lagerteils 101.5 verbindende) Nut 101.6 ebenfalls mit der Sendereinrichtungen 112.1 verbunden sind (wie dies in Figur 2 aus Gründen der Übersichtlichkeit jedoch nur unvollständig dargestellt ist).

Die räumliche Auflösung der Messung ist daher durch die jeweils vier senkrecht zur Axialrichtung (y-Richtung in Figur 1) ausgerichteten Messebenen in dem ersten und dritten Lagerteil 101.3, 101.5 definiert, welche durch die vier Dehnungsmessstreifen der beiden Sensoreinrichtungen 110 und 111 in dem ersten Lagerteil 101.3 und die vier Dehnungsmessstreifen der beiden Sensoreinrichtungen in dem dritten Lagerteil 101.5 definiert werden. Mithin sind in dem Messlager 101 also acht solcher Messebenen definiert.

Es versteht sich hierbei, dass bei anderen Varianten der Erfindung auch eine andere Anzahl von Messebenen definiert sein kann, beispielsweise indem noch weitere Ausnehmungen mit weiteren Sensoreinrichtungen (mit jeweils einem oder mehreren Dehnungsmessstreifen). Weiterhin versteht es sich, dass in der ersten und zweiten Ausnehmung jeweils eine andere Anzahl von Dehnungsmessstreifen vorgesehen sein kann.

Die Ausnehmungen 105, 106 und die Nuten 107, 108 sind derart ausgeführt, dass der Ringquerschnitt des Innenrings 103 nur minimal geschwächt ist, sodass und die hohe Steifigkeit des Lagers 101 nur unwesentlich verändert wird. Daher ist eine absolute Vergleichbarkeit mit unveränderten Serienlagern gegeben.

Um die lokale Schwächung des ersten Lagerrings im Bereich der jeweiligen Ausnehmung möglichst gering zu halten sowie eine ausreichende Abdeckung des belasteten Bereichs des Messlagers 101 durch die Messung zu erhalten, weisen die erste Ausnehmung 105 und die zweite Ausnehmung 106 in der Umfangsrichtung und quer zu der Umfangsrichtung einen entsprechenden Abstand auf.

So sind die erste Ausnehmung 105 und die zweite Ausnehmung 106 zueinander in der Umfangsrichtung um einen ersten Umfangswinkel $\alpha_1$ beabstandet (wie dies in der Abwicklung aus Figur 2 durch die Länge $r \cdot \alpha_1$ repräsentiert

ist, wobei r den Innenradius des Innenrings 103 bezeichnet), der 150% eines zweiten Umfangswinkels $\alpha_2$ entspricht. Der zweite Umfangswinkel $\alpha_2$ ist durch die Teilung der Zylinderrollen 104 definiert und berechnet sich noch der obigen Gleichung (1), also zu:

$$\alpha_2 = \frac{360°}{N}.$$

Hiermit wird eine besonders günstige Anordnung der Sensoreinrichtungen 110, 111 bei gleichzeitiger geringer Schwächung des ersten Lagerrings 103 ermöglicht. In diesem Zusammenhang ist anzumerken, dass ein geringer Abstand der beiden Ausnehmungen 105, 106 im Hinblick auf eine auf kurzem Wege erfolgende Ableitung der Sensorsignale (beispielsweise über entsprechende Signalleitungen) aus dem Lagerring 103 heraus von Vorteil ist.

Wie Figur 1 und 2 zu entnehmen ist, sind die erste Ausnehmung 105 und die zweite Ausnehmung 106 im Bereich einer Projektion eines Bewegungsraums der Zylinderrollen 104 entlang der Hauptstützrichtung, also der Radialrichtung R, angeordnet. Die erste Ausnehmung 105 und die zweite Ausnehmung 106 sind dabei zueinander in einer quer zu der Umfangsrichtung U (y-Richtung in Figur 1) verlaufenden Abstandsrichtung um einen Querabstand a beabstandet.

Der Bewegungsraum der Wälzkörper entspricht wiederum dem Toroid, das durch die im Betrieb um die Drehachse des Messlagers 101 umlaufenden Zylinderrollen 104 definiert ist. Dieser Bewegungsraum weist in der Abstandsrichtung eine Querabmessung b auf. Der Querabstand a der ersten und zweiten Ausnehmung 105, 106 beträgt etwa 50% der Querabmessung b.

In diesem Zusammenhang ist wiederum anzumerken, dass ein geringer Abstand der beiden Ausnehmungen 105, 106 (in Querrichtung und in Umfangsrichtung) im Hinblick auf eine auf kurzem Wege erfolgende Ableitung der Sensorsignale (beispielsweise über entsprechende Signalleitungen) aus dem Lagerring 103 heraus von Vorteil ist.

Um eine möglichst geringe mechanische Schwächung des Messlagers gegenüber einem entsprechenden Standardlager zu erzielen ist weiterhin die Tiefe der jeweiligen Ausnehmung 105, 106 begrenzt. Hierzu weisen die erste Ausnehmung 105 und die zweite Ausnehmung 106 in der Hauptstützrichtung (z-Richtung in Figur 1) eine Tiefenabmessung t auf, wobei die Tiefenabmessung t etwa 50% der Dickenabmessung d des Lagerrings 103 beträgt..

Um auch über die dritte Nut 109 wieder eine möglichst geringe lokale Schwächung des ersten Lagerrings 103 zu erzielen, sind die erste Ausnehmung 105 und die dritte Nut 109 zueinander in der Umfangsrichtung U um einen dritten Umfangswinkel $\alpha_3$ beabstandet angeordnet (wie dies in der Abwicklung aus Figur 2 durch die Länge r·$\alpha_3$ repräsentiert ist), der 150% des zweiten Umfangswinkels $\alpha_2$. beträgt.

Durch die Gesamtzahl der Messebenen, von deren Dehnungsmessstreifen die Signale simultan registriert werden, wird aus der Lagerkraftmessungen über den jeweiligen Umfang eine Messung der Lastzonen gewonnen. Für die Auswertung können die Messdaten jedes Messkreises durch die Verarbeitungseinheit 112.2 auf einen Referenzwinkel "zurück gedreht" werden.

In einer weiteren Ausführungsform können Nuten mit Dehnungsmessstreifen an der Stirnwand des Lagers 101 angeordnet werden, um (auch) die Längskräfte an dem Lager 101 zu erfassen.

Zweites Ausführungsbeispiel

Im Folgenden wird unter Bezugnahme auf die Figur 4 einen weiteres bevorzugtes Ausführungsbeispiel des erfindungsgemäßen Messlagers 201 beschrieben. Das Messlager 201 entspricht in seinem Aufbau und seiner Funktionsweise weit gehend dem Messlager 101, sodass hier lediglich auf die Unterschiede eingegangen werden soll. Insbesondere sind gleichartige Komponenten mit um den Wert 100 erhöhten Bezugszeichen versehen. Sofern nachfolgend keine anderweitige Beschreibung erfolgt, wird hinsichtlich dieser Komponenten auf die obigen Ausführungen zum ersten Ausführungsbeispiel verwiesen. Der einzige Unterschied zu dem Messlager 101 aus Figur 1 besteht darin, dass das Messlager 201 nicht als Zylinderrollenlager sondern als Kegelrollenlager ausgeführt ist. Hierbei sind die erste Ausnehmung 205 und die zweite Ausnehmung 206 (mit dem jeweiligen Ringkanal 207 bzw. 208 und der jeweiligen Sensoreinrichtung 210 bzw. 211) so angeordnet, dass ihre Längsachsen parallel zu Hauptstützrichtung H verlaufen, die senkrecht zur Lauffläche der 203.1 der Zylinderrollen 204 auf dem Innenring 203 ausgerichtet ist.

Die vorliegende Erfindung wurde vorstehend ausschließlich anhand von Beispielen beschrieben, bei denen die Sensoreinrichtungen im Innenring des Messlagers angeordnet sind. Es versteht sich jedoch, dass bei anderen Varianten der Erfindung zusätzlich oder alternativ auch Sensoreinrichtungen im Außenring des Messlagers angeordnet sein können.

Weiterhin wurde die vorliegende Erfindung vorstehend ausschließlich anhand von Beispielen beschrieben, bei denen das Messlager als Radiallager ausgebildet ist. Es versteht sich jedoch, dass die Erfindung auch bei Axiallagern eingesetzt werden kann.

Schließlich versteht es sich, dass die Erfindung nicht nur in Verbindung mit den Radsatzlagern von Schienenfahrzeugen sondern auch für beliebige andere Anwendungen verwendet werden kann, bei denen eine möglichst präzise Ermittlung der tatsächlichen Belastungen eines Lagers erwünscht und von Vorteil ist. Insbesondere lässt sich die Erfindung auch für beliebige anderen Arten von Fahrzeugen (wie Land-, Luft- und Wasserfahrzeuge), beliebige mobile und stationäre Anlagen, beispielsweise Windkraftanlagen, etc. einsetzen.

**Patentansprüche**

1. Messlager, insbesondere für einen Radsatz eines Schienenfahrzeugs, mit

   - einer Drehachse und wenigstens einem ersten Lagerring (103; 203), wobei
   - der erste Lagerring (103; 203) eine Hauptstützrichtung und eine quer zur Hauptstützrichtung verlaufende Umfangsrichtung definiert,
   - der erste Lagerring (103, 203) dazu ausgebildet ist, Tragkräfte aufzunehmen, die zumindest eine Kraftkomponente in der Hauptstützrichtung aufweisen und im Betrieb über eine Mehrzahl von Wälzkörpern (104; 204) in den ersten Lagerring (103; 203) eingeleitet werden, wobei
   - der erste Lagerring (103; 203) wenigstens eine erste Ausnehmung (105; 205) aufweist, in der eine Sensoreinrichtung (110; 210) angeordnet ist, die Sensoreinrichtung (110; 210) zum Erfassen einer für die in den ersten Lagerring (103; 203) eingeleiteten Tragkräfte repräsentativen Erfassungsgröße ausgebildet ist,
   - die erste Ausnehmung (105; 205) im Bereich einer Projektion eines Bewegungsraums der Wälzkörper (104; 204) entlang der Hauptstützrichtung angeordnet ist, wobei der Bewegungsraum der Wälzkörper (104; 204) dem Toroid entspricht, das durch die im Betrieb um die Drehachse umlaufenden Wälzkörper (104; 204) definiert ist,
   - der erste Lagerring (103; 203) wenigstens eine zweite Ausnehmung (106; 206) aufweist, in der eine weitere Sensoreinrichtung (111; 211) angeordnet ist, wobei die weitere Sensoreinrichtung (111; 211) zum Erfassen einer für die in den Lagerring (103; 203) eingeleiteten Tragkräfte repräsentativen Erfassungsgröße ausgebildet ist,
   **dadurch gekennzeichnet, dass**
   - die erste Ausnehmung (105; 205) und die zweite Ausnehmung (106; 206) zueinander in der Umfangsrichtung und quer zu der Umfangsrichtung beabstandet angeordnet sind.

2. Messlager nach Anspruch 1, **dadurch gekennzeichnet, dass**

   - die erste Ausnehmung (105; 205) zu der den Wälzkörpern (104; 204) abgewandten Seite des ersten Lagerrings (103; 203) offen ist.

3. Messlager nach einem der vorhergehenden Ansprüche, dadurch gekenntzeichnet, dass

   - die erste Ausnehmung (105; 205) und die zweite Ausnehmung (106; 206) zueinander in der Umfangsrichtung um einen ersten Umfangswinkel beabstandet angeordnet sind,
   - die Wälzkörper (104; 204) im Betrieb eine Teilung definieren, die einem zweiten Umfangswinkel entspricht, und
   - der erste Umfangswinkel größer ist als der zweite Umfangswinkel, wobei
   - insbesondere der erste Umfangswinkel wenigstens 110% des zweiten Umfangswinkels beträgt, vorzugsweise wenigstens 130% des zweiten Umfangswinkels beträgt, weiter vorzugsweise wenigstens 150% des zweiten Umfangswinkels beträgt.

4. Messlager nach einem der vorhergehenden Ansprüche, **dadurch gekennzeichnet, dass**

   - die erste Ausnehmung (105; 205) und die zweite Ausnehmung (106; 206) im Bereich einer Projektion eines Bewegungsraums der Wälzkörper (104; 204) entlang der Hauptstützrichtung angeordnet ist, wobei
   - die erste Ausnehmung (105; 205) und die zweite Ausnehmung (106; 206) zueinander in einer quer zu der Umfangsrichtung verlaufenden Abstandsrichtung um einen Querabstand beabstandet angeordnet sind,
   - der Bewegungsraum der Wälzkörper (104; 204) dem Toroid entspricht, das durch die im Betrieb um die Drehachse umlaufenden Wälzkörper (104; 204) definiert ist, und in der Abstandsrichtung eine Querabmessung aufweist,
   - der Querabstand 30% bis 70% der Querabmessung beträgt, vorzugsweise 40% bis 60% der Querabmessung beträgt, weiter vorzugsweise 45% bis 55% der Querabmessung beträgt

**5.** Messlager nach einem der vorhergehenden Ansprüche, **dadurch gekennzeichnet, dass**

- die erste Ausnehmung (105; 205) in der Hauptstützrichtung eine Tiefenabmessung aufweist und der erste Lagerring (103; 203) in der Hauptstützrichtung eine Dickenabmessung aufweist, wobei die Tiefenabmessung 30% bis 70% der Dickenabmessung beträgt, vorzugsweise 40% bis 60% der Dickenabmessung beträgt, weiter vorzugsweise 45% bis 55% der Dickenabmessung beträgt.
und/oder
- wenigstens ein in die erste Ausnehmung (105; 205) mündender Leitungskanal (107; 207) vorgesehen ist, der zum Herausführen einer mit der ersten Sensoreinrichtung (110; 210) verbundenen Signalleitungen aus den ersten Lagerring (103; 203) ausgebildet ist,
und/oder
- in dem ersten Lagerring (103; 203) wenigstens eine in der Umfangsrichtung umlaufende und In die erste Ausnehmung (105; 205) mündende erste Nut (107; 207) vorgesehen ist.

**6.** Messlager nach Anspruch 5, **dadurch gekennzeichnet, dass**

- wenigstens eine quer zu der Umfangsrichtung verlaufende weitere Nut (109) vorgesehen ist, die in die erste Nut mündet, wobei insbesondere die erste Ausnehmung (105; 205) und die weitere Nut (109) zueinander in der Umfangsrichtung um einen dritten Umfangswinkel beabstandet angeordnet sind,
- die Wälzkörper (104; 204) im Betrieb eine Teilung definieren, die einem zweiten Umfangswinkel entspricht, und
- der dritte Umfangswinkel größer ist als der zweite Umfangswinkel, wobei
- der dritte Umfangswinkel insbesondere wenigstens 110% des zweiten Umfangswinkels beträgt, vorzugsweise wenigstens 130% des zweiten Umfangswinkels beträgt, weiter vorzugsweise wenigstens 150% des zweiten Umfangswinkels beträgt.

**7.** Messlager nach einem der vorhergehenden Ansprüche, **dadurch gekennzeichnet, dass**

- der erste Lagerring (103; 203) eine Radialrichtung definiert und die Hauptstützrichtung der Radialrichtung entspricht, wobei insbesondere
- der erste Lagerring (103; 203) eine Axialrichtung definiert und in der Axialrichtung benachbart ein zweiter Lagerring (101.5) vorgesehen ist, wobei
- insbesondere zwischen den ersten Lagerring (103; 203) und dem zweiten Lagerring (101.5) ein Zwischenring (101.4) angeordnet ist und
- insbesondere der zweite Lagerring (101.5) bezüglich einer senkrecht zu der Axialrichtung verlaufenden Symmetrieebene (101.2) symmetrisch zu dem ersten Lagerring (103; 203) ausgebildet ist.

**8.** Messlager nach einem der vorhergehenden Ansprüche, **dadurch gekennzeichnet, dass**

- es als Zylinderrollenlager (101) oder als Kegelrollenlager (201) ausgebildet ist und/oder
- der erste Lagerring (103; 203) einen Innenring des Messlagers bildet und/oder
- der erste Lagerring (103; 203) einen im Betrieb umlaufenden Lagerring des Messlagers bildet.
und/oder
- die erste Sensoreinrichtung (110; 210) mit einem Sender (112.1) einer Telemetrieeinrichtung (112) verbunden ist.

**9.** Messlager nach einem der vorhergehenden Ansprüche, **dadurch gekennzeichnet, dass**

- die erste Sensoreinrichtung (110; 210) wenigstens einen mit dem ersten Lagerring (103; 203) verbundenen Dehnungsmessstreifen (110.1, 110.2) umfasst, vorzugsweise wenigstens zwei Dehnungsmessstreifen (110.1, 110.2) umfasst, wobei
- die erste Sensoreinrichtung (110; 210) insbeosndere zwei Dehnungsmessstreifen (110.1, 110.2) umfasst, die in der ersten Ausnehmung (105; 205) diametral gegenüberliegend angeordnet sind, und wobei
- insbesondere wenigstens ein Dehnungsmessstreifen (110.1, 110.2) im Wesentlichen in der Umfangsrichtung ausgerichtet ist.

**10.** Schienenfahrzeug mit einem Messlager (101; 201) nach einem der vorhergehenden Ansprüche.

**11.** Verfahren zur Ermittlung der mechanischen Belastungen eines Messlagers, insbesondere für einen Radsatz eines Schienenfahrzeugs, bei dem ein Messlager verwendet wird, das

- eine Drehachse und wenigstens einen ersten Lagerring (103; 203) aufweist, wobei
- der erste Lagerring (103; 203) eine Hauptstützrichtung und eine quer zur Hauptstützrichtung verlaufende Umfangsrichtung definiert,
- der erste Lagerring (103; 203) dazu ausgebildet ist, Tragkräfte aufzunehmen, die zumindest eine Kraftkomponente in der Hauptstützrichtung aufweisen und im Betrieb über eine Mehrzahl von Wälzkörpern (104; 204) in den ersten Lagerring (103; 203) eingeleitet werden,
- durch eine erste Sensoreinrichtung (110; 210) im Betrieb eine für die in den Lagerring (103; 203) eingeleiteten Tragkräfte repräsentative Erfassungsgröße erfasst und in Form von ersten Messsignalen ausgegeben wird, wobei die erste Sensoreinrichtung (110; 210) in einer ersten Ausnehmung (105; 205) des ersten Lagerrings (103; 203) angeordnet ist, und
- durch eine zweite Sensoreinrichtung (111; 211) im Betrieb eine für die in den Lagerring (103; 203) eingeleiteten Tragkräfte repräsentative Erfassungsgröße erfasst und in Form von zweiten Messsignalen ausgegeben wird, wobei die zweite Sensoreinrichtung (111; 211) in einer zweiten Ausnehmung (106: 206) des ersten Lagerrings (103; 203) angeordnet ist,
- die erste Ausnehmung (105; 205) im Bereich einer Projektion eines Bewegungsraums der Wälzkörper (104; 204) entlang der Hauptstützrichtung angeordnet ist, wobei der Bewegungsraum der Wälzkörper (104; 204) dem Toroid entspricht, das durch die im Betrieb um die Drehachse umlaufenden Wälzkörper (104; 204) definiert ist,
- die ersten Messsignale der ersten Sensoreinrichtung (110; 210) und die zweiten Messsignale der zweiten Sensoreinrichtung (111; 211) zur Ermittlung der mechanischen Belastungen verwendet werden, **dadurch gekennzeichnet, dass**
- die erste Ausnehmung (105; 205) und die zweite Ausnehmung (106; 206) zueinander in der Umfangsrichtung und quer zu der Umfangsrichtung beabstandet angeordnet werden.

**12.** Verfahren nach Anspruch 11, **dadurch gekennzeichnet, dass**

- der erste Lagerring (103; 203) eine Axialrichtung definiert und in der Axialrichtung benachbart ein zweiter Lagerring (101.5) vorgesehen ist, und durch wenigstens eine dritte Sensoreinrichtung im Betrieb eine für die in den zweiten Lagerring (101.5) eingeleiteten Tragkräfte repräsentative Erfassungsgröße erfasst und in Form von dritten Messsignalen ausgegeben wird, wobei die dritte Sensoreinrichtung in einer zweiten Ausnehmung des zweiten Lagerrings (101.5) angeordnet ist, und die dritten Messsignale der dritten Sensoreinrichtung zur Ermittlung der mechanischen Belastungen verwendet werden.

**13.** Verfahren nach einem der Ansprüche 11 oder 12, **dadurch gekennzeichnet, dass**

- die erste Sensoreinrichtung (110; 210) wenigstens einen mit dem ersten Lagerring (103; 203) verbundenen Dehnungsmessstreifen (110.1; 110.2) umfasst, vorzugsweise wenigstens zwei Dehnungsmessstreifen (110.1; 110.2) umfasst wobei
- die erste Sensoreinrichtung (110; 210) insbesondere zwei Dehnungsmessstreifen (110; 210) umfasst, die in der ersten Ausnehmung (105; 205) diametral gegenüberliegend angeordnet sind und die ersten Messsignale erzeugen, wobei
- insbesondere wenigstens ein Dehnungsmessstreifen (110.1; 110.2) im Wesentlichen in der Umfangsrichtung ausgerichtet ist.

**14.** Verfahren nach einem der Ansprüche 11 bis 13, **dadurch gekennzeichnet, dass** die ersten Messsignale der ersten Sensoreinrichtung (110; 210) über einen Sender (112.1) einer Telemetrieeinrichtung (112) an eine Auswertungseinheit (112.2) der Telemetrieeinrichtung (112) gesandt werden.

**Claims**

**1.** Measurement bearing, in particular for a wheel set of a rail vehicle, having

- a rotational axis and at least one first bearing ring (103; 203), wherein
- the first bearing ring (103, 203) defines a main supporting direction and a circumferential direction extending transversally with respect to the main supporting direction,

- the first bearing ring (103; 203) is designed to take up bearing forces which have at least one force component in the main supporting direction and, during operation, said bearing forces are applied to the first bearing ring (103; 203) via a plurality of rolling bodies (104; 204), wherein

- the first bearing ring (103; 203) has at least one first recess (105; 205) in which a sensor device (110; 210) is arranged, the sensor device (110; 210) being designed to sense a sensing variable which represents the bearing forces which are applied to the first bearing ring (103; 203),

- the first recess (105; 205) is arranged in the area of a projection of a movement area of the rolling bodies (104; 204) along the main supporting direction, wherein the movement area of the rolling bodies (104; 204) corresponds to the toroid defined by the rolling bodies (104; 204) rotating around the axis of rotation during operation.

- the first bearing ring (103; 203) has at least one second recess (106; 206), in which a further sensor device (111; 211) is arranged, wherein the further sensor (111; 211) device is designed to sense a sensing variable which represents the bearing forces which are applied to the bearing ring (103; 203).

**characterised in that**

- the first recess (105; 205) and the second recess (106; 206) are arranged mutually spaced apart in the circumferential direction and transversally to the circumferential direction.

**2.** Measurement bearing according to claim 1, **characterised in that**

- the first recess (105; 205) is open to the side of the first bearing ring (103; 203) turned away from the rolling bodies (104; 204).

**3.** Measurement bearing according to one of the preceding claims, **characterised in that**

- the first recess (105; 205) and the second recess (106; 206) are arranged mutually spaced apart in the circumferential direction by a first circumferential angle,

- the rolling bodies (104; 204), during operation, define a division which corresponds to a second circumferential angle, and

- the first circumferential angle is greater than the second circumferential angle.

- the first circumferential angle, in particular, being at least 110% of the second circumferential angle, preferably being at least 130% of the second circumferential angle, more preferably being at least 150% of the second circumferential angle.

**4.** Measurement bearing according to one of the preceding claims, **characterised in that**

- the first recess (105; 205) and the second recess (106; 206), along the main supporting direction, are arranged in the area of a projection of a movement area of the rolling bodies (104; 204), wherein

- the first recess (105; 205) and the second recess (106; 206) are arranged a transversal distance apart from one another in a spacing direction running transversally to the circumferential direction,

- the movement area of the rolling bodies (104; 204) corresponds to the toroid that is defined by the rolling bodies (104; 204) rotating around the axis of rotation during operation, and has a transversal dimension in the spacing direction,

- the transversal spacing is 30% to 70% of the transversal dimension, preferably 40% to 60% of the transversal dimension, more preferably 45% to 55% of the transversal dimension.

**5.** Measurement bearing according to one of the preceding claims, **characterised in that**

- the first recess (105; 205) has a depth dimension in the main supporting direction and the first bearing ring (103; 203) has a thickness dimension in the main supporting direction, wherein the depth dimension is 30% to 70% of the thickness dimension, preferably 40% to 60% of the thickness dimension, more preferably 45% to 55% of the thickness dimension.

and/or

- at least one line duct (107; 207) opening into the first recess (105; 205) is provided, designed to lead a signal line connected with the first sensor device (110; 210) to the outside of the first bearing ring (103; 203).

and/or

- in the first bearing ring (103; 203), at least one first groove (107; 207) running in the circumferential direction and opening into the first recess (105; 205) is provided.

**6.** Measurement bearing according to claims 5, **characterised in that**

- at least one further groove (109) running transversally to the circumferential direction is provided which opens into the first groove, wherein, in particular,
- the first recess (105; 205) and the further groove (109) are arranged a mutually spaced apart in the circumferential direction by a third circumferential angle,
- the rolling bodies (104; 204) during operation define a division which corresponds to a second circumferential angle, and
- the third circumferential angle is greater than the second circumferential angle, wherein
- the third circumferential angle, in particular, is at least 110% of the second circumferential angle, preferably at least 130% of the second circumferential angle, more preferably at least 150% of the second circumferential angle.

7. Measurement bearing according to one of the preceding claims, **characterised in that**

- the first bearing ring (103; 203) defines a radial direction and the main supporting direction corresponds to the radial direction,
- the first bearing ring (103; 203), in particular, defines an axial direction and, in the axial direction, a second bearing ring (101.5) is provided alongside, wherein,
- in particular, between the first bearing ring (103; 203) and the second bearing ring (101.5) an intermediate ring (101.4) is arranged, and
- in particular, the second bearing ring (101.5), with reference to a plane of symmetry (101.2) running perpendicularly to the axial direction, is designed to be symmetrical with the first bearing ring (103; 203).

8. Measurement bearing according to one of the preceding claims, **characterised in that**

- it is in the form of a cylindrical roller bearing (101) or a tapered roller bearing (201).
and/or
- the first bearing ring (103; 203) forms an inner ring of the measurement bearing and/or
- the first bearing ring (103, 203) forms a bearing ring of the measurement bearing that rotates during operation.
and/or
- the first sensor device (110; 210) is connected with a transmitter (112.1) of a telemetry device (112).

9. Measurement bearing according to one of the preceding claims, **characterised in that**

- the first sensor device (110; 210) comprises at least one strain gauge (110.1, 110.2) connected with the first bearing ring (103; 203), preferably, at least two strain gauges (110.1, 110.2)
- the first sensor device (110; 210), in particular, comprising two strain gauges (110.1, 110.2) which are arranged diametrically opposed to each other in the first recess (105; 205),
- at least one strain gauge (110.1, 110.2), in particular, being essentially aligned in the circumferential direction.

10. Rail vehicle with a measurement bearing (101; 201) according to one of the preceding claims.

11. Method for determining the mechanical loads on a measurement bearing, in particular for a wheel set of a rail vehicle, in which a measurement bearing is used having

- a rotational axis and at least one first bearing ring (103; 203), wherein
- the first bearing ring (103, 203) defines a main supporting direction and a circumferential direction extending transversally with respect to the main supporting direction,
- the first bearing ring (103; 203) is designed to take up bearing forces which have at least one force component in the main supporting direction ,and during, operation said bearing forces are applied to the first bearing ring (103; 203) via a plurality of rolling bodies (104; 204),
- by means of a first sensor device (110; 210), during operation, a sensing variable which represents the bearing forces which are applied to the bearing ring (103; 203) is sensed and output in the form of first measurement signals, wherein the first sensor device (110; 210) is arranged in a first recess (105; 205) of the first bearing ring (103; 203), and
- by means of a second sensor device (111; 211), during operation, a sensing variable which represents the bearing forces which are applied to the bearing ring (103; 203) is sensed and output in the form of second measurement signals, wherein the second sensor device (111; 211) is arranged in a second recess (106; 206) of the first bearing ring (103; 203), and

- the first recess (105; 205) is arranged in the area of a projection of a movement area of the rolling bodies (104; 204) along the main supporting direction, wherein the movement area of the rolling bodies (104; 204) corresponds to the toroid defined by the rolling bodies (104; 204) rotating around the axis of rotation during operation.
- the first measurement signals from the first sensor device (110; 210) and the second measurement signals from the second sensor device (111; 211) are used to determine the mechanical loads,
**characterised in that**
- the first recess (105; 205) and the second recess (106; 206) are arranged mutually spaced apart in the circumferential direction and transversally to the circumferential direction.

12. Method according to claim 25 or 26, **characterised in that**

- the first bearing ring (103; 203) defines an axial direction and a second bearing ring (101.5) is provided in the axial direction alongside it, and by means of at least a third sensor device, during operation, a sensing variable which represents the bearing forces which are applied to the second bearing ring (101.5) is sensed and output in the form of third measurement signals, wherein the third sensor device is arranged in a second recess of the second bearing ring (101.5), and the third measurement signals from the third sensor device are used to determine the mechanical loads.

13. Method according to one of claims 11 or 12, **characterised in that**

- the first sensor device (110; 210) comprises at least a strain gauge (110.1; 110.2) connected with the first bearing ring (103; 203), preferably, at least two strain gauges (110.1; 110.2),
- the first sensor device (110; 210), in particular, comprising two strain gauges (110; 210), which are arranged in the first recess (105; 205) diametrically opposed to one another and generate the first measurement signals,
- at least one strain gauge (110.1; 110.2), in particular, being aligned essentially in the circumferential direction.

14. Method according to one of claims 11 to 13, **characterised in that** the first measurement signals of the first sensor device (110; 210) are sent via a transmitter (112.1) of a telemetry device (112) to an evaluation unit (112.2) of the telemetry device (112).

### Revendications

1. Palier de mesure, notamment pour un set de roue d'un véhicule ferroviaire, comprenant

- un axe de rotation et au moins une première bague de palier (103; 203),
- la première bague de palier (103; 203) définissant une direction d'appui principale et une direction de circonférence qui s'étend transversalement par rapport à la direction d'appui principale,
- la première bague de palier (103; 203) étant configurée pour prendre les forces porteuses qui présentent au moins une composante de force dans la direction d'appui principale et qui, en fonctionnement, sont induites dans la première bague de palier (103; 203) par le biais d'une pluralité d'éléments de roulement (104; 204),
- la première bague de palier (103; 203) présentant au moins un premier creux (105; 205) dans lequel est disposé un dispositif de détection (110; 210), le dispositif de détection (110; 210) étant conçu pour détecter une grandeur détectée représentative des forces porteuses induites dans la première bague de palier (103;203),
- le premier creux (105; 205), le long de la direction d'appui principale, étant disposé dans la zone d'une projection d'un espace de déplacement des éléments de roulement (104; 204), l'espace de déplacement des éléments de roulement (104; 204) correspondant à l'espace toroïdal qui est défini par les éléments de roulement (104; 204) tournant, en fonctionnement, autour de l'axe de rotation,
- la première bague de palier (103; 203) présentant au moins un deuxième creux (106; 206) dans lequel est disposé un autre dispositif de détection (111; 211), l'autre dispositif de détection (111; 211) étant conçu pour détecter une grandeur détectée représentative des forces porteuses induites dans la bague de palier (103;203),
**caractérisé en ce que**
- le premier creux (105; 205) et le deuxième creux (106; 206) sont mutuellement espacés dans la direction de circonférence et transversalement à la direction de circonférence.

2. Palier de mesure selon la revendication 1, **caractérisé en ce que**

- le premier creux (105; 205) est ouvert vers la face de la première bague de palier (103; 203) opposée aux éléments de roulement (104; 204).

3. Palier de mesure selon l'une quelconque des revendications précédentes, **caractérisé en ce que**

- le premier creux (105; 205) et le deuxième creux (106; 206) sont mutuellement espacés par un premier angle de circonférence dans la direction de circonférence,
- les éléments de roulement (104; 204), en fonctionnement, définissent une division qui correspond à un deuxième angle de circonférence et
- le premier angle de circonférence est plus grand que le deuxième angle de circonférence,
- en particulier, le premier angle de circonférence étant au moins 110% du deuxième angle de circonférence, de préférence étant au moins 130% du deuxième angle de circonférence, plus préférablement étant au moins 150% du deuxième angle de circonférence.

4. Palier de mesure selon l'une quelconque des revendications précédentes, **caractérisé en ce que**

- le premier creux (105; 205) et le deuxième creux (106; 206), le long de la direction d'appui principale, est disposé dans la zone d'une projection d'un espace de déplacement des éléments de roulement (104; 204),
- le premier creux (105; 205) et le deuxième creux (106; 206) étant mutuellement espacés d'une distance transversale dans une direction d'écartement qui s'étend transversalement à la direction de circonférence,
- l'espace de déplacement des éléments de roulement (104; 204) correspondant à l'espace toroïdal qui est défini par les éléments de roulement (104; 204) en fonctionnement tournant autour de l'axe de rotation, et présentant une dimension transversale dans la direction d'écartement,
- la distance transversale étant de 30% à 70% de la dimension transversale, de préférence étant de 40% à 60% de la dimension transversale, plus préférablement étant de 45% à 55% de la dimension transversale.

5. Palier de mesure selon l'une quelconque des revendications précédentes, **caractérisé en ce que**

- le premier creux (105; 205) présente une dimension de profondeur dans la direction d'appui principale et la première bague de palier (103; 203) présente une dimension d'épaisseur dans la direction d'appui principale, la dimension de profondeur étant 30% à 70% de la dimension d'épaisseur, de préférence étant 40% à 60% de la dimension d'épaisseur, plus préférablement étant 45% à 55% de la dimension d'épaisseur, et/ou
- au moins une gaine de lignes (107; 207) débouchant dans le premier creux (105; 205) est prévue, qui est configurée pour faire sortir une ligne de signal reliée au premier dispositif de détection (110; 210) de la première bague de palier (103; 203), et/ou
- dans la première bague de palier (103; 203) au moins une première rainure (107; 207) s'étendant dans la direction de circonférence et s'ouvrant dans le premier creux (105; 205) est prévue.

6. Palier de mesure selon la revendication 5, **caractérisé en ce que**

- au moins une autre rainure (109) qui s'étend transversalement à la direction de circonférence est prévue qui s'ouvre dans la première rainure, en particulier,
- le premier creux (105; 205) et l'autre rainure (109) étant mutuellement espacés par un troisième angle de circonférence dans la direction de circonférence,
- les éléments de roulements (104; 204), en fonctionnement, définissent une divisin qui correspond à un deuxième angle de circonférence, et
- le troisième angle de circonférence est plus grand que le deuxième angle de circonférence,
- le troisième angle de circonférence, en particulier, étant au moins 110% du deuxième angle de circonférence, de préférence étant au moins 130% du deuxième angle de circonférence, plus préférablement étant au moins 150% du deuxième angle de circonférence.

7. Palier de mesure selon l'une quelconque des revendications précédentes, **caractérisé en ce que**

- la première bague de palier (103; 203) définit une direction radiale et la direction d'appui principale correspond à la direction radiale,
- la première bague de palier (103; 203) définissant, en particulier, une direction axiale et une deuxième bague de pallier (101.5) étant prévue côte à côte dans la direction axiale,

- une bague intermédiaire (101.4) étant disposée, en particulier, entre la première bague de palier (103; 203) et la deuxième bague de palier (101.5) et

- en particulier, la deuxième bague de palier (101.5) étant configurée de façon symétrique à la première bague de palier (103; 203) par rapport à un plan de symétrie (101.2) s'étendant de façon perpendiculaire à la direction axiale.

**8.** Palier de mesure selon l'une quelconque des revendications précédentes, **caractérisé en ce que**

- il est réalisé sous la forme d'un palier à rouleaux cylindriques (101) ou sous la forme d'un palier à rouleaux coniques (201)
et/ou
- la première bague de palier (103; 203) forme une bague intérieure du palier de mesure
et/ou
- la première bague de palier (103; 203) forme une bague de palier du palier de mesure qui tourne en fonctionnement
et/ou
- le premier dispositif de détection (110; 210) est relié à un émetteur (112.1) d'un dispositif de télémétrie (112).

**9.** Palier de mesure selon l'une quelconque des revendications précédentes, **caractérisé en ce que**

- le premier dispositif de détection (110; 210) comprend au moins une jauge de contrainte (110.1, 110.2) reliée à la première bague de palier (103; 203), de préférence comprend au moins deux jauges de contrainte (110.1, 110.2),

- le premier dispositif de détection (110; 210), en particulier, comprenant deux jauges de contrainte (110.1; 110.2) qui sont disposées de façon diamétralement opposées dans le premier creux (105; 205), et

- en particulier, au moins une jauge de contrainte étant alignée (110.1, 110.2) sensiblement dans la direction de circonférence.

**10.** Véhicule ferroviaire avec un palier de mesure (101; 201) selon l'une quelconque des revendications précédentes.

**11.** Procédé de détermination des contraintes mécaniques d'un palier de mesure, notamment pour une paire de roue d'un véhicule ferroviaire, dans lequel un palier de mesure est utilisé, qui

- présente un axe de rotation et au moins une première bague de palier (103; 203),

- la première bague de palier (103; 203) définissant une direction d'appui principale et une direction de circonférence qui s'étend transversalement par rapport à la direction d'appui principale,

- la première bague de palier (103; 203) étant configurée pour prendre les forces porteuses qui présentent au moins une composante de force dans la direction d'appui principale et qui, en fonctionnement, sont induites dans la première bague de palier (103; 203) par le biais d'une pluralité d'éléments de roulement (104; 204),

- une grandeur détectée représentative des forces porteuses induites dans la bague de palier (103; 203) est enregistrée, en fonctionnement, au moyen d'un premier dispositif de détection (110; 210) et est distribuée sous la forme de premiers signaux de mesure, le premier dispositif de détection (110; 210) étant disposé dans un premier creux (105; 205) de la première bague de palier (103; 203), et

- une grandeur détectée représentative des forces porteuses induites dans la bague de palier (103; 203) est enregistrée, en fonctionnement, au moyen d'un deuxième dispositif de détection (111; 211) et est distribuée sous la forme de deuxièmes signaux de mesure, le deuxième dispositif de détection (111; 211) étant disposé dans un deuxième creux (106; 206) de la première bague de palier (103; 203),

- le premier creux (105; 205), le long de la direction d'appui principale, étant disposé dans la zone d'une projection d'un espace de déplacement des éléments de roulement (104; 204) l'espace de déplacement des éléments de roulement (104; 204) correspondant à l'espace toroïdal qui est défini par les éléments de roulement (104; 204) en fonctionnement tournant autour de l'axe de rotation,

- les premiers signaux de mesure du premier dispositif de détection (110; 210) et les deuxièmes signaux de mesure du deuxième dispositif de détection (111; 211) pour la détection des contraintes mécaniques sont utilisés, **caractérisé en ce que**

- le premier creux (105; 205) et le deuxième creux (106; 206) sont mutuellement espacés dans la direction de circonférence et transversalement à la direction de circonférence.

**12.** Procédé selon la revendication 11, **caractérisé en ce que**

- la première bague de palier (103; 203) définit une direction axiale et, dans la direction axiale, une deuxième bague de palier (101.5) est prévue côte à côte, et une grandeur détectée représentative des forces porteuses induites dans la deuxième bague de palier (101.5) est enregistrée, en fonctionnement, au moyen d'au moins un troisième dispositif de détection et est délivré sous la forme de troisièmes signaux de mesure, le troisième dispositif de détection étant disposé dans un deuxième creux de la deuxième bague de palier (101.5), et les troisièmes signaux de mesure du troisième dispositif de détection étant utilisés pour déterminer les contraintes mécaniques.

**13.** Procédé selon l'une quelconque des revendications 11 ou 12, **caractérisé en ce que**

- le premier dispositif de détection (110; 210) comporte au moins une jauge de contrainte (110.1; 110.2) reliée à la première bague de palier (103; 203), comporte préférablement au moins deux jauges de contrainte (110.1; 110.2),
- le premier dispositif de détection (110; 210), en particulier, comportant deux jauges de contrainte (110; 210) qui sont disposées dans le premier creux (105; 205) de façon diamétralement opposée et génèrent les premiers signaux de mesure,
- en particulier, au moins une jauge de contrainte étant alignée (110.1, 110.2) sensiblement dans la direction de circonférence.

**14.** Procédé selon l'une quelconque des revendications 11 à 13, **caractérisé en ce que** les premiers signaux de mesure du premier dispositif de détection (110; 210) sont envoyés par un émetteur (112.1) d'un dispositif de télémétrie (112) à une unité d'évaluation (112.2) du dispositif de télémétrie (112).

Fig. 1

Fig. 2

102.1

102

112.2    112    102.4    102.5    102.3    102.2

Fig. 3

201

203.1    204

H

203    z    207    205    208    206

z
x ⊙ ——→ y

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1197415 B1
- DE 102004054201 A1
- US 4341122 A
- GB 1378685 A
- WO 01123862 A1